## Europäisches Patentamt
## European Patent Office
## Office européen des brevets

(19)

(11) Numéro de publication: **0 031 338**
**B1**

(12) **FASCICULE DE BREVET EUROPEEN**

(45) Date de publication du fascicule du brevet:
**16.05.84**

(21) Numéro de dépôt: **80901175.2**

(22) Date de dépôt: **03.07.80**

(86) Numéro de dépôt international:
**PCT/FR 80/00108**

(87) Numéro de publication internationale:
**WO 81/00142 (22.01.81 Gazette 81/2)**

(51) Int. Cl.³: **F 16 D 23/14**

(54) **BUTEE DE DEBRAYAGE.**

(30) Priorité: **06.07.79 FR 7917553**

(43) Date de publication de la demande:
**08.07.81 Bulletin 81/27**

(45) Mention de la délivrance du brevet:
**16.05.84 Bulletin 84/20**

(84) Etats contractants désignés:
**DE GB**

(56) Documents cités:
**FR - A - 2 304 828**
**FR - A - 2 410 761**
**US - A - 4 042 086**
**US - A - 4 046 436**

(73) Titulaire: **VALEO, 64, Avenue de la Grande-Armée, F-75017 Paris (FR)**

(72) Inventeur: **BECCARIS, Carlo, Via Trinita'19B, Santena, Turin (IT)**

(74) Mandataire: **CABINET BONNET-THIRION, 95 Boulevard Beaumarchais, F-75003 Paris (FR)**

## Butée de débrayage

La présente invention concerne d'une manière générale les butée de débrayage, c'est-à-dire les organes destinés à agir sur le dispositif débrayeur d'un embrayage, notamment pour véhicule automobile.

Ainsi au'on le sait, une telle butée de débrayage comporte globalement, d'une part un élément de manoeuvre, qui est destinée à être soumis à un organe de commande, en pratique une fourchette de débrayage, et d'autre part un élément de manoeuvre, à agir sur le dispositif débrayeur de l'embrayage concerné, et qui est libre en rotation par rapport à l'élément de manoeuvre tout en étant lié axialement à celui-ci.

S'agissant d'une butée de débrayage dite autocentreuse, l'élément d'attaque présente en pratique, radialement, visà-vis de l'élément de manoeuvre, une latitude omnidirectionnelle de cheminement, des moyens élastiques à action axiale sollicitant cet élément d'attaque en direction d'un flasque annulaire que présente transversalement à cet effet l'élément de manoeuvre.

L'élément d'attaque porte sur le flasque annulaire de l'élément de manoeuvre, d'un premier côté de celui-ci.

De l'autre côté de ce flasque annulaire agit l'organe de commande.

Ce flasque annulaire appartient fréquemment à une pièce réalisée ent matière synthétique.

Dans ce cas, pour en éviter une détérioration par l'organe de commande, il est le plus souvent doublé en surface par une plaque d'appui propore au contact de celui-ci.

Dans ce cas également, la pièce synthétique à laquelle appartient le flasque annulaire de l'élément de manoeuvre comporte aussi, le plus souvent, des bossages sensiblement axiaux, dont est solidaire ledit flasque annulaire et qui sont propres à un maintien circonférentiel de la butée de débrayage vis-à-vis de l'organe de commande, et donc à un blocage en rotation sur celui-ci de cette butée de débrayage.

Par ailleurs, il s'avère souvent souhaitable de pouvoir encliqueter la butée de débrayage vis-à-vis de l'organe de commande destinée à agir sur elle, pour une manipulation de l'ensemble sans risque de chute.

C'est le cas notamment lorsque la butée de débrayage est mise en place sur la trompette d'une boîte de vitesses, avec l'organe de commande qui lui est associé, et que la boîte de vitesses ainsi équipée doit être individuellement l'objet d'un transport avant d'être insérée sur la chaîne de transmission à la constitution de laquelle elle participe.

Il a certes été proposé, notamment dans le bevet français publié sous le No. 2 255 502, de permettre un tel encliquetage relatif de la butée de débrayage sur l'organe de commande qui lui est associé, en dotant cette butée de débrayage d'agrafes à ailes élastiquement déformables propres à permettre son engagement sur cet organe de commande.

Mais, outre que ce brevet français se rapporte à une butée de débrayage réalisée spécifiquement en métal, et ne comportant donc pas de plaque d'appui, les agrafes qui y sont mises en oeuvre sont d'un seul tenant avec des pinces attelant axialement l'un à l'autre les deux éléments constitutifs principaux de cette butée de débrayage.

Il en résulte que la réalisation conjointe de telles agrafes et de telles pinces est relativement complexe.

De même, dans le brevet US-A-4 042 086, il est proposé une butée de débrayage, qui ne comporte pas de plaque d'appui, au sens de la présente demande, et qui, pour sa liaison à l'organe de commande associé, est munie de pièces complexes, lesdites pièces, qui ne sont d'ailleurs pas adaptées à assurer un encliquetage dudit organe de commande mais un simple accrochage de celui-ci, comportant, d'un seul tenant, une agrafe en forme de U, pour leur accrochage à la butée, puis une partie formant un coude élastique, une partie plane en bout dudit coude, une partie en équerre par rapport à la partie plane précédente, et un ergot saillant latéralement en bout de celle-ci.

La présente invention a d'une manière générale pour objet, s'agissant d'une butée de débrayage mettant en oeuvre une plaque d'appui, de tirer parti de la présence de cette plaque d'appui pour une réalisation simple et économique d'agrafes propres à permettre l'encliquetage d'une telle butée de débrayage sur l'organe de commande qui lui est associé.

De manière plus précise, la présente invention a pour objet une butée de débrayage du genre comportant un élément de manoeuvre, destiné à être soumis à un organe de commande, en pratique une fourchette de débrayage, et un élément d'attaque destiné, sous l'action de l'élément demanoeuvre, à agir sur le dispositif débrayeur d'un embrayage, ledit élément de manoeuvre comportant transversalement, pour action de l'organe de commande, un flasque annulaire doublé en surface par une plaque d'appui propre au contact dudit organe de commande, en combinaison avec des agreafes à ailes latérales élastiquement déformables propres à un encliquetage élastique de la butée de débrayage sur ledit organe de commande, et caractérisée en ce que chacune desdites agrafes constitue une pièce indépendante, en forme générale de U, dont la partie médiane s'étend du côté de la plaque d'appui axialement tourné vers l'élément d'attaque, et dont les ailes traversent axialement ladite plaque d'appui.

La réalisation de telles agrafes est économique, et leur mise en place aisée.

Par exemple, la partie médiane de la pièce en U constitue une agrafe peut être insérée entre la plaque d'appui et le flasque annulaire de l'élément de maneuvre, sous une patte radiale de ladite plaque d'appui.

Dans ce cas, sa mise en place est soit effectuée directement au contact du flasque annulaire de l'élément de manoeuvre, soit effectuée sur la plaque d'appui avant application de celle-ci contre ce flasque.

En variante, la partie médiane de la pièce en U que forme une agrafe s'étend due côté du flasque annulaire de l'élément de manoeuvre axialement tourné vers l'élément d'attaque, les ailes de ladite pièce en U traversant axialement d'une part ledit flasque annulaire et d'autre part la plaque d'appui.

Dans tous les cas, l'élément de manoeuvre comportant, pour chaque agrafe, deux bossages sensiblement axiaux propres au maintien circonférentiel de la butée de débrayage vis-à-vis de l'organe de commande, les ailes d'une agrafe suivant l'invention s'étendent en pratique axialement, au contact desdits bossages, en sorte qu'elles assurent avantageusement une protection des faces correspondantes de ces bossages à l'égard de l'organe de commande.

Suivant un développement de l'invention, les ailes d'une telle agrafe présentent chacune, le long de leur bord, un retour en équerre, qui s'étend au-dessus du bossage axial correspondant du flasque annulaire de l'élément de manoeuvre, en sorte qu'elles assurent également une protection des faces correspondantes de ces bossages à l'égard de l'organe de commande.

Ainsi, une agrafe suivant l'invention peut assurer une triple fonction, d'encliquetage élastique de la butée de débrayage vis-à-vis de l'organe de commande qui lui est associé, de protection, vis-à-vis de l'organe de commande, d'une première face de chacun des bossages que comporte cette butée de débrayage pour son calage en rotation sur celui-ci, et de protection, également vis-à-vis de l'organe de commande, d'une deuxième face de chacun desdits bossages, distincte de la précédente.

Suivant un autre développement de l'invention, elle peut également, si désiré, remplir une fonction supplémentaire, qui est d'assurer par ellemême le maintien axial de la plaque d'appui contre le flasque annulaire de l'élément de manoeuvre, ou de participer à un tel maintien.

Les caractéristiques et avantages de l'invention ressortiront d'ailleurs de la description qui va suivre, à titre d'exemple, en référence aux dessins schématiques annexés sur lesquels, la

fig. 1 est une vue en coupe axiale d'une butée de débrayage suivant l'invention, selon la ligne I-I de la fig. 2; la

fig. 2 est une vue en élévation latérale de cette butée de débrayage, suivant la flèche II de la fig. 1; la

fig. 3 en est une vue partielle en plan, suivant la flèche III de la fig. 2; la

fig. 4 en est une vue partielle en coupe, suivant la ligne IV-IV de la fig. 2; la

fig. 5 est, à échelle supérieure, une vue en perspective d'une des agrafes mises en oeuvre dans la butée de débrayage suivant l'invention; la

fig. 6 est, à échelle différente, une vue partielle, en perspective éclatée, de cette butée de débrayage, illustrant un mode de montage possible de celle-ci; la

fig. 7 est une vue analogue à celle de la fig. 5, pour une variante de réalisation de l'agrafe concernée; les

fig. 8 à 10 sont, avec des arrachements locaux, des vues analogues à celle de la fig. 3 et concernent chacune respectivement une variante de réalisation.

Ces figures illustrent, à titre d'exemple, l'application de l'invention à une butée de débrayage autocentreuse.

Dans l'exemple de réalisation représenté, cette butée autocentreuse comporte un élément de manoeuvre 10, qui est réalisé en matière synthétique, et qui comporte ainsi d'un seul tenant, d'une part un manchon 11, propre à son engagement sur le trompette entourant de manière usuelle l'arbre de sortie d'une boîte de vitesses, et d'autre part, transversalement, un flasque annulaire 12, qui est destiné à être soumis à l'action d'un organe de commande.

Cet organe de commande est usuellement une fourchette de débrayage.

Une telle fourchette de débrayage ne fait pas partie de la présente invention, et elle ne sera donc pas décrite en détail ici.

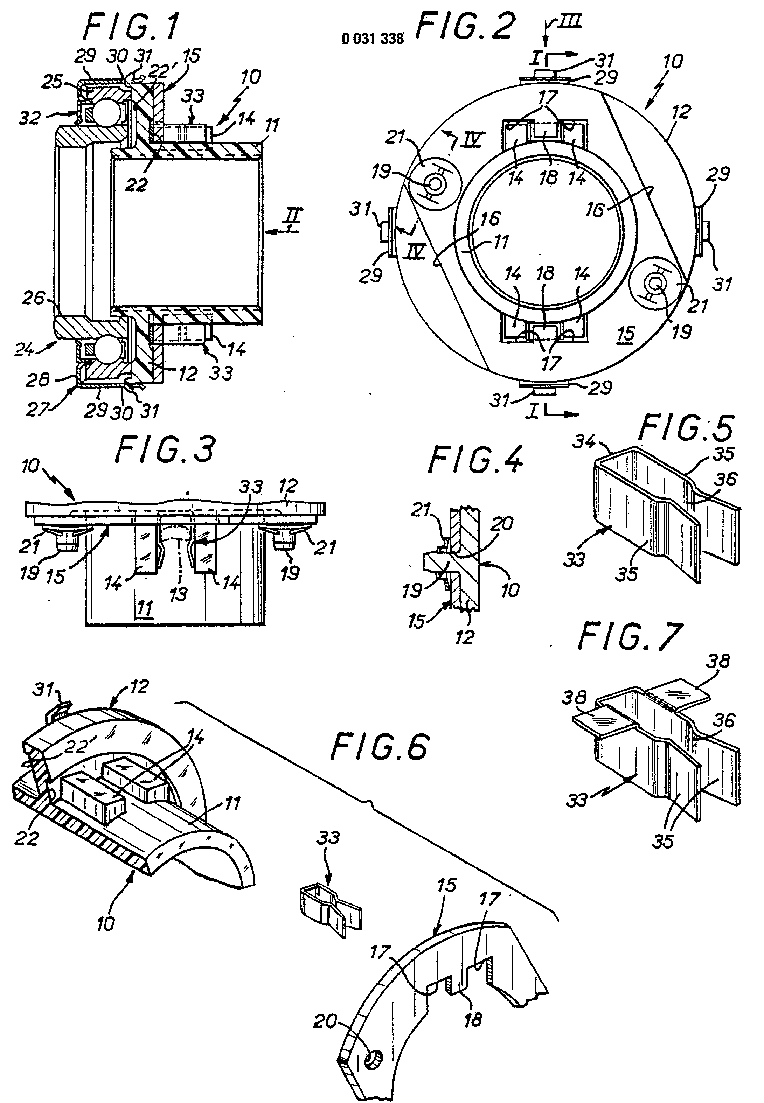

Il suffira de préciser que, réalisée par exemple en tôle convenablement conformée, elle présente en saillie, à la périphérie interne d'une ouverture par laquelle elle est engagée sur le manchon 11 de la butée de débrayage concernée, deux doigts d'action radialement dirigés l'un vers l'autre; l'un de ces doigts est schématisé en traits interrompus à la fig. 3, sous la référence 13.

Pour coopération avec de tels doigts 13 de l'organe de commande, le manchon 11 de l'élément de manoeuvre 10 comporte en saillie, à sa surface extérieure, en positions diamétralement opposées, deux paires de bossages axiaux 14 propres chacune à encadrer un tel doigt 13.

De tels bossages axiaux 14 s'étendent à compter du flasque annulaire 12, et ils en sont donc solidaires.

En pratique, pour préserver le flasque annulaire 12 de l'action axiale des doigts 13 de l'organe de commande, ce flasque annulaire 12 est doublé en surface par une plaque d'appui 15 entourant annulairement le manchon 11; dans l'exemple de réalisation représenté, cette plaque d'appui 15 est tronquée, son contour extérieur comportant deux bords rectilignes parallèles 16.

Pour son engagement axial sur les bossages 14 du manchon 11, la plaque d'appui 15 présente, en positions diamétralement opposées, deux paires d'échancrures 17 qui ménagent entre elles, en direction l'une de l'autre, deux pattes radiales 18.

Pour le maintien axial de la plaque d'appui 15 contre le flasque annulaire 12 de l'élément de manoeuvre 11, celui-ci dans les exemples de réalisation représentés sur les fig. 1 à 9, présente d'un seul tenant, en saillie, en positions diamétralement opposées, deux pions 19, que sont sensiblement parallèles à l'axe de l'ensemble, et sur lesquels la plaque d'appui 15 est engagée axialement par des ouvertures 20 qu'elle présente à cet effet, en coopération avec des anneaux élastiques 21, qui sont engagés à force sur les pions 19 audelà de la plaque d'appui 15, et qui, ancrés dans lesdits pions 19, appliquent élastiquement cette plaque d'appui 15 auch contact du flasque annulaire 12 et la bloquent ainsi en translation.

Axialement en retrait par rapport à sa surface frontale au contact de laquelle se trouve la plaque d'appui 15, le flasque annulaire 12 comporte, en bordure du manchon 11, un logement annulaire 22, dont le rôle apparaîtra ci-après; de même, axialement en retrait par rapport à sa surface frontale opposée, il comporte un logement annulaire 22'.

A l'élément de manoeuvre 10 est associé un élément d'attaque 24 destiné, de manière usuelle, à agir sur le dispositif débrayeur d'un embrayage, sous l'action de l'élément de manoeuvre 10.

Dans la forme de réalisation représentée, et de manière connue en soi, cet élément d'attaque 24 est sonstitué par un roulement à billes, dont la bague externe 25 est axialement au contact du flasque annulaire 12 de l'élément de manoeuvre 10, du côté de celui-ci opposé à la plaque d'appui 15, et dont la bague interne 26 fait axialement saillie vers l'avant, pour action sur le dispositif débrayeur de l'embrayage concerné.

Un capot 27 attelle axialement l'élément d'attaque 24 à l'élément de manoeuvre 10.

Dans la forme de réalisation représentée, et de manière connue en soi, ce capot 27 comporte une paroi frontale 28, que forme en elle-même des moyens élastiques à action axiale, en constituant par exemple, tel que représenté, une rondelle ondulée du type de celles vendues sous la marque déposée »ONDUFLEX«, et qui, portant sur la tranche avant de la bague externe 25 du roulement à billes constituant l'élément d'attaque 24, applique axialement celui-ci contre le flasque annulaire 12 de l'élément de manoeuvre 10, et, d'un seul tenant avec cette paroi frontale 28, une pluralité de pattes axiales 29 qui présentent chacune, au voisinage de leur extrémité, une ouverture 30 par laquelle elles sont engagées sur des saillies en forme de crochet 31 solidaires de l'élément de manoeuvre 10.

Suivant l'invention, ces saillies en forme de crochet 31 sont établies de place en place, à la périphérie du flasque annulaire 12 de l'élément de manoeuvre 10, d'un seul tenant avec celui-ci.

Certes en variante, et de manière connue en soi, les saillies en forme de crochet 31 pourraient être formées à la périphérie de la plaque d'appui 15.

Mais la disposition décrite ci-dessus implique que le flasque annulaire 12 de l'élément de manoeuvre 10 assume, de manières distinctes, une double fonction, de retenue de capot 27, et de retenue de la plaque d'appui 15.

Autrement dit, ces deux fonctions sont dans ce cas avantageusement dissociées.

La longueur des pattes axiales 29 du capot 27 se trouve avantageusement réduite, ce que correspond à une économie de métal.

S'agissant d'une butée autocentreuse, un libre jeu radial est laissé à l'élément d'attaque 24, tant du côté du manchon 11 de l'élément de manoeuvre 10, que du côté des pattes axiales 29 du capot 27, en sorte que cet élément d'attaque 24 présente radialement, vis-à-vis de l'élément de manoeuvre 10, au contact du flasque annulaire 12 de celui-ci une latitude omnidirectionnelle de cheminement, sous le contrôle du serrage élastique développé à son égard par la paroi frontale ondulée 28 du capot 27.

Par ailleurs, de manière connue en soi, un capot annulaire de protection 32 est engagé sur l'élément d'attaque 24, entre sa bague interne 26 et la paroi frontale 28 du capot 27.

Suivant l'invention, des agrafes 33 sont prévues, pour un encliquetage élastique de la butée de débrayage concernée sur l'organe de commande auquel elle est associée, et, plus précisément, sur les doigts 13 de celui-ci.

Une telle agrafe 33 est prévue pour chacun de ces doigts 13.

Suivant l'invention, il s'agit d'une pièce indépendante, en forme générale de U, représentée isolément à la fig. 5.

L'agrafe 33 suivant l'invention comporte donc, d'un seul tenant, d'une part une partie médiane 34, et d'autre part deux ailes élastiquement déformables 35 dont les extrémités, conformées à cet effet en dièdre en direction l'une de l'autre, forment conjointement un col de largeur réduite 36; une telle agrafe 33 est par exemple en métal.

Dans les exemples de réalisation illustrés par les fig. 1 à 9, chaque agrafe 33 est insérée, par sa partie médiane 34, entre la plaque d'appui 15 et le flasque annulaire 12 de l'élément de manoeuvre 10, sous la patte radiale correspondante 18 de cette plaque d'appui 15, à la faveur du logement annulaire 22 que présente axialement en retrait ledit flasque annulaire 12.

En pratique, les ailes élastiquement déformables 35 d'une agrafe 33 s'étendent axialement, parallèlement aux bossages axiaux 14 correspondants, au contact de ces bossages, entre ceux-ci, en traversant axialement la plaque d'appui 15 à la faveur des échancrures 17 de celle-ci.

Tel qu'illustré par la fig. 6, les agrafes 33 peuvent être mises en place sur l'élément de manoeuvre 10 avant engagement sur celui-ci de la plaque d'appui 15.

En variante, elles peuvent être mises en place sur la plaque d'appui 15, avant engagement de celle-ci sur l'élément de manoeuvre 10.

Quoi qu'il en soit, une fois la plaque d'appui 15 rapportée sur l'élément de manoeuvre 10, les agrafes 33 suivant l'invention se trouvent fermement assujetties à celui-ci.

Ainsi qu'il est aisé de le comprendre, lors de l'engagement axial, sur la butée de débrayage, de l'organe de commande associé à celle-ci, les doigts 13 de cet organe de commande, doivent franchir élastiquement le col 36 de l'agrafe 33 correspondante, jusqu'à venir porter sur les pattes radiales 18 de la plaque d'appui 15, et, après un tel franchissement, l'organe de commande se trouve attelé axialement à la butée de débrayage.

Il en résulte qu'une manipulation conjointe de l'ensemble ainsi constitué par la butée de débrayage et son organe de commande peut se faire sans risque que l'organe de commande ne vienne à échapper à la butée de débrayage.

Ainsi qu'il est aisé de le comprendre, en service, les ailes 35 de chaque agrafe 33 protègent du doigt 13 correspondant de l'organe de commande les bossages axiaux 14 de l'élément de manoeuvre 10, puiqu'elles doublent en surface les faces de ces bossages axiaux sur lesquels un tel doigt serait normalement susceptible d'agir par sa tranche.

Suivant la variante de réalisation illustrée par la fig. 7, une protection analogue est fornie à celles des faces des bossages axiaux 14 que sont orthogonales aux précédentes et sur lesquelles peut normalement agir l'organe de commande par la tranche de l'ouverture centrale par laquelle il est engagé sur l'élément de manoeuvre 10.

Suivant cette variante, les ailes 35 d'une agrafe 33 présentent chacune le long de leur bord un retour en équerre 38.

Ainsi qu'il est aisé de le comprendre, lorsqu'une agrafe 33 est en place entre deux bossages axiaux 14, ses retours 38, qui sont en directions opposées l'un par rapport à l'autre, s'étendent au-dessus de ces bossages 14, et protègent donc ceux-ci.

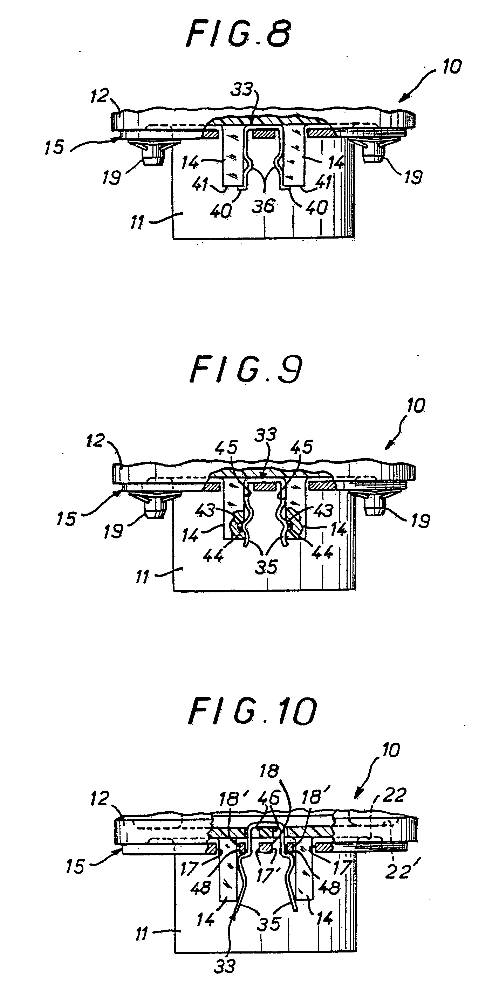

Suivant la variante de réalisation illustrée par la fig. 8, l'une au moins des ailes 35 de la pièce en U que forme une agrafe 33, et, en pratique, chacune de celles-ci est, à son extrémité libre, repliée transversalement en équerre 40 au contact de la tranche d'extrémité 41 du bossage axial 14 correspondant de l'élément de manoeuvre 10.

Son maintien s'en trouve conforté.

En variante, fig. 9, des moyens d'engagement complémentaires sont prévus dans le même but entre d'une part l'une au moins de ses ailes 35, et, en pratique, chacune de celles-ci, et, d'autre part, le bossage axial 14 correspondant de l'élément de manoeuvre 10.

Dans l'exemple de réalisation représenté sur cette fig. 9, ces moyens d'engagement complémentaires comportent, pour une aile 35 de l'agrafe 33, une saillie 43, dans la zone médiane d'une telle aile, et, pour le bossage axial 14 correspondant de l'élément de manoeuvre 10, un logement 44, prévu à cet effet en creux dans le flanc 45 correspondant d'un tel bossage et propre à l'encliquetage élastique de la saille 43.

Par exemple, et tel que représenté, une telle saillie 43 peut très simplement résulter d'une déformation locale de l'aile 35 concernée.

Dans la variante de réalisation représentée sur la fig. 10, la partie médiane de la pièce en U que forme une agrafe 33 s'étend du côté du flasque annulaire 12 de l'élément de manoeuvre 10 axialement tourné vers l'élément d'attaque 24, c'est-à-dire du côté de ce flasque opposé à celui sur lequel se trouvent les bossages axiaux 14, les ailes 35 d'une telle agrafe traversant axialement, d'une part ledit flasque annulaire 12, à la faveur de passages 46 ménagés à cet effet dans celui-ci, en bordure du manchon 11, et d'autre part, la plaque d'appui 15 à la faveur de passages également ménagés à cet effet dans celui-ci et il s'agit en l'espèce d'échancrures 17 ménagées à la périphérie interne de cette plaque d'appui 15.

Pour l'implantation de la partie médiane des agrafes 33, il est tiré parti du logement annulaire 22' que présente en retrait le flasque annulaire 12 de l'élément de manoeuvre 10 du côté opposé aux bossages axiaux 14.

Conjointement, l'une au moins des ailes 35 de chaque agrafe 33, et, en pratique, chacune de celles-ci, présente transversalement un épaulement 48 par lequel elle porte sur la plaque d'appui 15, sur la face de celle-ci tournée vers les bossages axiaux 14, c'est-à-dire sur celle des faces de cette plaque d'appui opposée à celle par laquelle l'élément de manoeuvre 10.

Dans l'exemple de réalisation représenté, un tel épaulement transversal 48 résulte d'un repli en équerre de l'aile 35 considérée, ce repli en équerre s'étendant en direction opposée à l'autre aile 35 de l'agrafe concernée.

De ce fait, les échancrures 17 par lesquelles la plaque d'appui 15 est engagée sur les bossages axiaux 14 ne bordent plus directement les pattes radiales 18 de la plaque d'appui 15; ces pattes radiales 18 sont bordées par des échancrures 17' prévues pour le passage des ailes 35 des agrafes 33, et, entre les échancrures 17 et les échancrures 17', subsistent des pattes radiales 18' sur lesquelles portent lesdites ailes 35 par leur épaulement 48.

Bien entendu, il est donné aux passages 46 du flasque annulaire 12 de l'élément de manoeuvre 10 et aux échancrures 17' de la plaque d'appui 15 un développement circonférentiel suffisant pour permettre le passage des épaulements 48 d'une agrafe 33 après déflexion l'une vers l'autre des ailes 35 d'une telle agrafe.

Grâce à de tels épaulements 48, une telle agrafe, qui, par sa partie médiane, prend appui sur le flasque annulaire 12 d'un premier côté de celui-ci, maintient la plaque d'appui 15 entre ce flasque annulaire 12, de l'autre côté de celui-ci.

Elle assure donc par elle-même le maintien axial de cette plaque d'appui 15, ou, en coopération avec l'autre agrafe, participe au moins à ce maintien.

De ce fait, et tel que représenté, les pions 19 précédemment mis en oeuvre, peuvent être supprimés.

Une disposition semblable peut être adoptée avec la forme de réalisation décrite en référence à la fig. 9.

Bien entendu, la présente invention ne se limite pas aux formes de réalisation décrites et représentées, mais englobe oute variante d'exécution, notamment en ce qui concerne l'attelage du capot 27 sur l'élément de manoeuvre 10, qui peut être assuré de manière différente que celle plus particulièrement décrite ici.

Son domaine d'application n'est par non plus limité à celui des butées de débrayage autocentreuses, mais s'étend à n'importe quel type de butée de débrayage.

## Revendications

1. Butée de débrayage du genre comportant un élément de manoeuvre (10), destiné à être soumis à un organe de commande, en pratique une fourchette de débrayage, et un élément d'attaque (24) destiné, sous l'action de l'élément de manoeuvre, à agir sur le dispositif débrayeur d'un emprayage, ledit élément de manoeuvre (10) comportant transversalement, pour action de l'organe de commande, un flasque annulaire (12) doublé en surface par une plaque d'appui (15) propre au contact dudit organe de commande, en combinaison avec des agrafes (33) à ailes latérales élastiquement déformables (35) propres à un encliquetage élastique de la butée de débrayage sur ledit organe de commande, caractérisée en ce que chacune des agrafes (33) constitue une pièce indépendante en forme générale de U, dont la partie médiane (34) s'étend du côté de la plaque d'appui (15) axialement tourné vers l'élément d'attaque (24), et dont les ailes (35) traversent axialement ladite plaque d'appui (15).

2. Butée de débrayage suivant la revendication 1, caractérisée en ce que la partie médiane (34) de la pièce en U que forme une agrafe (33) est insérée entre la plaque d'appui (15) et le flasque annulaire (12) de l'élément de manoevre (10), sous une patte radiale (18) de ladite plaque d'appui (15).

3. Butée de débrayage suivant la revendication 2, caractérisée en ce que, pour insertion de la partie médiane (34) d'une agrafe (33), le flasque annulaire (12) présente un logement (22) axialement en retrait par rapport à sa surface frontale au contact de laquelle se trouve la plaque d'appui (15).

4. Butée de débrayage suivant la revendication 1, cacactérisée en ce que la partie médiane (34) de la pièce en U que forme une agrafe (33) s'étend du côté du flasque annulaire (12) de l'élément de manoeuvre (10) axialement tourné vers l'élément d'attaque (24), les ailes (35) de ladite pièce en U traversant axialement d'une part ledit flasque annulaire (12), et d'autra part la plaque d'appui (15).

5. Butée de débrayage suivant la revendication 4, caractérisée en ce que, pour la partie médiane (34) d'une agrafe (33), le flasque annulaire (12) présente un logement (22) axialement en retrait par rapport à sa surface frontale opposée à celle au contact de laquelle se trouve la plaque d'appui (15).

6. Butée de débrayage souvant l'une quelconque des revendications 1 à 5, dans laquelle, pour chaque agrafe (33), l'élément de manoeuvre (10) comporte deux bossages (14) sensiblement axiaux propres au maintien circonférentiel de la butée de débrayage vis-à-vis de l'organe de commande, caractérisée en ce que les ailes (35) d'une telle agrafe (33) s'étendent axialement au contact desdits bossages (14), entre ceux-ci.

7. Butée de débrayage suivant la revendication 6, caractérisée en ce que l'une des ailes (35) d'une agrafe (33) est, à son extrémité libre, repliée transversalement, au contact de la tranche d'extrémité (41) du bossage axial (14) correspondant de l'élément de manoeuvre (10).

8. Butée de débrayage suivant la revendication 6, caractérisée en ce que, entre l'une au moins des ailes (35) d'une agrafe (33) et le bossage axial (14) correspondant de l'élément de manoeuvre (10) sont prévus des moyens d'engagement complémentaires (43, 44).

9. Butée de débrayage suivant la revendication 8, caractérisée en ce que l'aile (35) concernée de l'agrafe (33) est élastiquement encliquetée sur le bossage axial (14) correspondant de l'élément de manoeuvre (10), ladite aile (35) comportant dans sa zone médiane une saillie (43), une déformation locale par exemple, par laquelle elle est engagée dans un logement (44) prévu à cet effet en creux dans le flanc correspondant dudit bossage axial (14).

10. Butée de débrayage suivant l'une quelconque des revendications 4, 8 et 9, caractérisée en ce que l'ung au moins des ailes (35) d'une agrafe (33) présente transversalement un épaulement (48), un repli en équerre par exemple, par lequel elle porte sur la plaque d'appui (15), sur la face de celle-ci opposée à celle par laquelle ladite plaque d'appui (15) est au contact du flasque annulaire (12) de l'élément de manoeuvre (10), en sorte qu'elle assure par elle-même le maintien axial de la plaque d'appui (15) contre ledit flasque annulaire (12) ou participe à un tel maintien.

11. Butée de débrayage suivant la revendication 6, caractérisée en ce que les ailes (35) d'une agrafe (33) présentent chacune le long de leur bord un retour en équerre (38) qui s'étend au-dessus du bossage axial (14) correspondant du flasque annulaire (12) de l'élément de manoeuvre (10).

12. Butée de débrayage suivant la revendication 6, caractérisée en ce que la plaque d'appui (15) présente des échancrures (17) par lesquelles elle est engagée axialement sur les bossages axiaux (14) du flasque annulaire (12) de l'élément de manoeuvre (10).

## Patentansprüche

1. Kupplungsausrücker mit einem von einem Steuerorgan, praktisch einer Ausrückgabel, beaufschlagten Betätigungselement (10), und einem Eingriffselement (24), das unter der Einwirkung des Betätigungselements auf eine Ausrückvorrichtung einer Kupplung einwirkt, wobei das Betätigungselement (10) für das Zusammenwirken mit dem Steuerorgan einen ringförmigen Querflansch (12) aufweist, der auf einer Seite mittels einer für den Kontakt mit dem Steuerorgan vorgesehenen Abstützplatte (15) verstärkt ist, die mit seitliche, federnd verformbare Flügel (35) aufweisenden Klammern (33) zusammenwirkt, die zu einem federnden Einrasten des Ausrückers auf dem Steuerorgan dienen, dadurch gekennzeichnet, daß jede der Klammern (33) ein getrenntes, im wesentlichen U-förmiges Teil bildet, daß dessen mittlerer Bereich (34) sich entlang der Seite der Abstützplatte (15) erstreckt, die in axialer Richtung dem Eingriffselement (24) zugewandt ist, und daß die Flügel (35) die Abstützplatte axial durchqueren.

2. Kupplungsausrücker nach Anspruch 1, dadurch gekennzeichnet, daß der mittlere Bereich (34) der U-förmigen Klammer (33) zwischen der Abstützplatte (15) und dem ringförmigen Querflansch (12) des Betätigungselements (10) hinter einer sich radial erstreckenden Lasche (18) der Abstützplatte (15) eingesetzt ist.

3. Kupplungsausrücker nach Anspruch 2, dadurch gekennzeichnet, daß zum Einsetzen des mittleren Bereichs (34) einer Klammer (33) der ringförmige Querflansch (12) eine Aufnahme (22) aufweist, die bezüglich der sich in Kontakt mit der Abstützplatte (15) befindlichen Vorderfläche axial zurückgesetzt ist.

4. Kupplungsausrücker nach Anspruch 1, dadurch gekennzeichnet, daß der mittlere Bereich (34) der U-förmigen Kammer (33) sich entlang der Seite des ringförmigen Querflansches (12) des Betätigungselements (10) erstreckt, die in axialer Richtung dem Eingriffselement (24) zugewandt ist, und daß die Flügel (35) des U-förmigen Teils in axialer Richtung zum einen den ringförmigen Querflansch (12) und zum anderen die Abstützplatte (15) durchqueren.

5. Kupplungsausrücker nach Anspruch 4, dadurch gekennzeichnet, daß der ringförmige Querflansch (12) für den mittleren Bereich (34) der Klammer (33) eine Aufnahme (22) aufweist, die bezüglich seiner Oberfläche, welche derjenigen abgewandt ist mit der sie sich in Kontakt mit der Abstützplatte (15) befindet, axial zurückgesetzt ist.

6. Kupplungsausrücker nach mindestens einem der Ansprüche 1 bis 5, wobei das Betätigungselement (10) für jede Klammer (33) zwei im wesentlichen axial gerichtete Vorsprünge (14) aufweist, die der Lagehaltung in Umfangsrichtung des Kupplungsausrückers bezüglich des Steuerorgans dienen, dadurch gekennzeichnet, daß die Flügel (35) solcher Klammer (33) sich in axialer Richtung zwischen den Vorsprüngen (14) erstrecken und diese berühren.

7. Kupplungsausrücker nach Anspruch 6, dadurch gekennzeichnet, daß einer der Flügel (35) einer Klammer (33) an seinem freien Ende in Querrichtung abgebogen ist und sich in Kontakt mit der Randfläche (41) des zugeordneten axialen Vorsprungs (14) des Betätigungselements (10) befindet.

8. Kupplungsausrücker nach Anspruch 6, dadurch gekennzeichnet, daß zumindest einer der Flügel (35) einer Klammer (33) und der entsprechende axiale Vorsprung (14) des Betätigungselements (10) mit einander komplementären Einsetzmitteln (43, 44) versehen sind.

9. Kupplungsausrücker nach Anspruch 8, dadurch gekennzeichnet, daß der betreffende Flügel (35) der Klammer (33) federnd auf dem zugeordneten axialen Vorsprung (14) des Betätigungselements (10) eingerastet ist und in einem mittleren Abschnitt einen Vorsprung (43), beispielsweise eine örtliche Verformung, besitzt, mittels welcher er in einer zu diesem Zweck in der zugeordneten Flanke des axialen Vorsprungs (14) hohl ausgebildeten Aufnahme (44) eingesetzt ist.

10. Kupplungsausrücker nach einem der Ansprüche 4, 8 und 9, dadurch gekennzeichnet, daß zumindest einer der Flügel (35) einer solchen Klammer (33) in Querrichtung eine Schulter (48) besitzt, beispielsweise eine rechtwinkelige Abbiegung, mittels welcher er mit der Fläche der Abstützplatte (15) zusammenwirkt, welche dem ringförmigen Querflansch (12) des Betätigungselements (10) abgewandt ist, und zwar dergestalt, daß sie selber die axiale Lagehaltung der Abstützplatte (15) gegen den ringförmigen Querflansch (12) sicherstellt oder an einer solchen Lagehaltung teilnimmt.

11. Kupplungsausrücker nach Anspruch 6, dadurch gekennzeichnet, daß die Flügel (35) der Klammer (33) entlang ihres Rands jeweils eine rechtwinkelige Umbiegung (38) aufweisen, die sich über den zugeordneten axialen Vorsprung (14) des ringförmigen Flansches (12) des Betätigungselements (10) erstreckt.

12. Kupplungsausrücker nach Anspruch 6, dadurch gekennzeichnet, daß die Abstützplatte (15) Ausnehmungen (17) besitzt, mittels welchen sie in axialer Richtung auf die axialen Vorsprünge (14) des ringförmigen Flansches (12) des Betätigungselements (10) aufgesetzt ist.

**Claims**

1. Clutch release bearing of the kind comprising an operating element (10) adapted to be subjected to a control member, in practice a clutch release fork, and a drive element (24) adapted under the action of the operating element to act on the release device of a clutch, the said operating element (10) comprising, transversely, for actuating the control member, an annular flange (12) lined on its surface with a bearing plate (15) suited to contact with the said control member, in combination with clips (33) having elastically deformable lateral wings (35) adapted to elastically snap fit the clutch release bearing on the said control member, characterized in that each one of the clips (33) constitutes an independent, generally U-shaped part whose median part (34) extends on the side of the bearing plate (15) axially turned towards the drive element (24) and whose branches (35) extent axially through the said bearing plate (15).

2. A clutch release bearing according to claim 1, characterized in that the median part (34) of the U-shaped part that forms a clip (33) is inserted between the bearing plate (15) and the annular flange (12) of the operating element (10), under a radial lug (18) of the said bearing plate (15).

3. A clutch release bearing according to claim 2, characterized in that for the insertion of the median part (34) of the clip (33), the annular flange (12) has a recess (22) axially set back with respect to its front surface which is in contact with the bearing plate (15).

4. A clutch release bearing according to claim 1, characterized in that the median part (34) of the U-shaped part that forms a clip (33) extends on the side of the annular flange (12) of the operating element (10) axially turned toward the drive element (24), the wings (35) of the said U-shaped part extending axially through on the one hand, the said annular flange (12) and, on the other hand, the bearing plate (15).

5. A clutch release bearing according to claim 4, characterized in that, for the median part (34) of clip (33), the annular flange (12) has a recess (22) axially set back with respect to its front surface opposite to the one which is in contact with the bearing plate (15).

6. A clutch release bearing according to any one of claim 1 to 5, wherein for each clip (33), the operating element (10) comprises two substantially axial bosses (14) suited to maintain the circumferential position of the clutch release bearing with respect to the control member, characterized in and axially in contact with the said bosses (14).

7. A clutch release bearing according to cklaim 6, characterizes in that the free end of one of the wings (35) of a chlip (33) is bent transversely into contact with the free edge (41) of the corresponding axial boss (14) of the operating element (10).

8. A clutch release bearing according to claim 6, characterized in that between at least one of the wings (35) of a clip (33) and the corresponding axial boss (14) of the operating element (10) are provided complementary engagement means (43, 44).

9. A clutch release bearing according to claim 8, characterized in that the concerned wings (33) of the clip (33) is elastically snapped on the corresponding axial boss (14) to the operating element (10), the said wing (35) comprising in its median zone a protuberance (43), for example a local deformation, by which the wing is engaged in a recess (44) hollowed out of the corresponding flank of the axial boss (14).

10. A clutch release bearing according to any one of claims 4, 8 and 9, characterized in that at least one of the wings (35) of a clip (33) has, transversely, a shoulder (48), for example a right angle bend, by which it bears against the bearing plate (15) on the face thereof opposite the face of the bearing plate (15) which contacts the annular flange (12) of the operating element (10) so that the clip itself maintains the axial position of the bearing plate (15) against the said annular flange (12) or participates in maintaining the axial position.

11. A clutch release bearing according to claim 6, characterized in that the wings (35) of one clip (33) each have along their edge a right angle return (38) which extends over the corresponding axial boss (14) of the annular flange (12) of the operating element (10).

12. A clutch release bearing according to claim 6, characterized in that the bearing plate (15) has notches (17) by which it is axially engaged on the axial bosses (14) of the annular flange (12) of the operating element (10).

FIG.1

FIG.2

0 031 338

FIG.3

FIG.4

FIG.5

FIG.6

FIG.7

9

# FIG.8

# FIG.9

# FIG.10